# EUROPÄISCHE PATENTSCHRIFT

(11) **EP 2 229 291 B1**
(45) Veröffentlichungstag und Bekanntmachung des Hinweises auf die Patenterteilung: **30.01.2019**
(21) Anmeldenummer: 08861179.3
(22) Anmeldetag: 10.12.2008
(51) Int. Cl.: B60L 1/00, B60L 9/30, B60L 15/20, B60L 11/18, B60L 9/00

(54) **ANORDNUNG ZUR VERSORGUNG VON EINRICHTUNGEN EINER LOKOMOTIVE MIT ELEKTRISCHER ENERGIE UND VERFAHREN ZUM BETREIBEN DER ANORDNUNG**
ARRANGEMENT FOR SUPPLYING DEVICES OF A LOCOMOTIVE WITH ELECTRIC ENERGY AND METHOD FOR OPERATING SAID ARRANGEMENT
SYSTÈME POUR ALIMENTER EN ÉNERGIE ÉLECTRIQUE DES ÉQUIPEMENTS D'UNE LOCOMOTIVE, ET PROCÉDÉ D'EXPLOITATION DU SYSTÈME

(30) Priorität: 14.12.2007 DE 102007060893
(43) Veröffentlichungstag der Anmeldung: 22.09.2010
(73) Patentinhaber: Bombardier Transportation GmbH, 10785 Berlin (DE)
(72) Erfinder: JÖRG, Markus, 5236 Remigen (CH); FALKE, Ewald, 9000 St. Gallen (CH)
(74) Vertreter: Patentanwälte Bressel und Partner mbB
(86) Internationale Anmeldenummer: PCT/EP2008/010822
(87) Internationale Veröffentlichungsnummer: WO 2009/077184

(56) Entgegenhaltungen:
- EP-A- 0 594 457
- EP-A- 0 698 519
- EP-A1- 0 594 457
- EP-A1- 0 698 519
- EP-A1- 0 734 900
- DD-A1- 220 271
- US-A1- 2005 122 071
- US-A1- 2005 122 071

## Beschreibung

Die Erfindung betrifft eine Anordnung zur Versorgung von Einrichtungen einer Lokomotive mit elektrischer Energie. Die Erfindung betrifft ferner eine Lokomotive mit einer solchen Anordnung und ein Verfahren zum Betreiben einer solchen Anordnung.

Die Erfindung betrifft sowohl Lokomotiven mit einem Aggregat zur Bereitstellung einer Traktionsenergie aus einem elektrischen Versorgungsnetz als auch Lokomotiven mit einer Brennkraftmaschine zur Erzeugung elektrischer Energie für die Traktion.

Und einer Lokomotive wird jegliche Art von Schienenfahrzeug mit eigener Traktionsvorrichtung (d. h. mit zumindest einem Fahrmotor) verstanden. Unter den Begriff fallen insbesondere eigenständige Fahrzeuge, die mit einem Schienenfahrzeug-Zugverband gekoppelt werden können, aber auch Triebwagen oder Triebzüge, bei denen in demselben Fahrzeug oder Fahrzeug-Bereich sowohl Einrichtungen zur Erzeugung der Traktion als auch Raum für Güter und/oder Personen vorhanden sind. Insbesondere kann die für die Erzeugung der Traktion insgesamt erforderliche Kombination von Einrichtungen (z. B. Hochspannungsaggregat oder Brennkraftmaschine, Stromrichter, Traktions-Zwischenkreis und Fahrmotoren) in verschiedenen Einheiten eines Zugverbandes oder Einheiten eines sonstigen Schienenfahrzeugs verteilt angeordnet sein. Die Erfindung ist in besonderem Maße für Schienenfahrzeug-Einheiten geeignet, die zumindest den Stromrichter, den Traktions-Zwischenkreis und zumindest einen Teil der Fahrmotoren aufweisen und von anderen Schienenfahrzeug-Einheiten abgekoppelt werden können.

Lokomotiven weisen außer den unmittelbar für die Traktion erforderlichen Einrichtungen (z. B. Hochspannungsaggregat, Traktionswechselrichter und Fahrmotoren) zusätzliche Einrichtungen auf, die einen Betrieb der Lokomotive ermöglichen. Diese Hilfseinrichtungen oder Hilfsbetriebe benötigen ebenfalls elektrische Energie und sind in speziellen Fällen über einen Hilfsbetriebe-Wechselrichter an einen Traktions-Zwischenkreis angeschlossen, aus dem auch die für die Traktion benötigte Energie bezogen wird. Beispiele sind Lüfter der Fahrmotoren, Kühler der Stromrichter, Kompressor zum Komprimieren von Gasen (z. B. zur Erzeugung von Druckluft für eine Bremsanlage) eine Feuerlöscheinrichtung der Lokomotive, elektronische Einrichtungen zur Steuerung des Betriebs der Lokomotive, Batterieladegeräte, Heizungen, z. B. Scheibenheizung, Klimageräte, Steckdosen, Lichteinrichtungen. Eine weitere Gruppe von elektrischen Einrichtungen, die in unter Umständen an die Lokomotive angekoppelten Schienenfahrzeug-Einheiten angeordnet sind, kann über einen eigenen, zusätzlichen Wechselrichter an den Traktionszwischenkreis angeschlossen sein.

Insbesondere außerhalb des normalen Fahrbetriebes einer Lokomotive kommt es vor, dass die Lokomotive nicht mit Energie aus der während des normalen Fahrbetriebes benutzten Energiequelle betrieben werden kann. Beispiele für solche Situationen sind eine fehlende Oberleitung bei einer elektrischen Lokomotive, das Verbot, die Brennkraftmaschine der Lokomotive zu betreiben (z.B. in geschlossenen Hallen ohne Absaugvorrichtung) und/oder zur Wartung bzw. Reparatur der Lokomotive. Z.B. in einem Fahrzeug-Depot, bei der Erst-Inbetriebnahme oder bei der Wartung der Lokomotive kann es aber vorkommen, dass die Lokomotive dennoch bewegt werden muss. Es ist dabei von Vorteil, wenn sich die Lokomotive aus eigener Kraft bewegt.

EP 0 698 519 A1 beschreibt eine Steuerungsvorrichtung für ein elektrisches Fahrzeug. Eine von der Steuerungsvorrichtung gesteuerte Anordnung weist einen Haupttransformator zum Transformieren einer Wechselspannung, die über einen Stromabnehmer bereitgestellt wird, einen PWM-Konverter, der mit der Sekundärseite des Transformators über einen Unterbrecher verbunden ist, einen Gleichspannungs-Zwischenkreis, der an den PWM-Konverter angeschlossen ist, einen Wechselrichter, der mit Wechselstrom Fahrmotoren des Fahrzeugs speist und der an den Gleichspannungs-Zwischenkreis angeschlossen ist, und einen Umrichter für Hilfsbetriebe, der ebenfalls an den Gleichspannungs-Zwischenkreis angeschlossen ist, auf. Beim Betrieb der Anordnung werden sowohl die Fahrmotoren als auch die Hilfsbetriebe über separate Wechselrichter mit elektrischer Energie aus dem Gleichspannungs-Zwischenkreis versorgt.

EP 0 594 457 A1 beschreibt eine Steuerungsvorrichtung für ein elektrisches Fahrzeug, die ein Stromabnehmer, einen Unterbrecher, einen Transformator, einen daran angeschlossenen Gleichrichter, einen auf der Gleichspannungsseite des Gleichrichters angeschlossenen Gleichspannungs-Zwischenkreis und einen an den Gleichspannungs-Zwischenkreis angeschlossenen Umrichter für Motoren aufweist. Ferner ist an den Gleichspannungs-Zwischenkreis über Dioden eine Stromquelle für Hilfsbetriebe an den Gleichspannungs-Zwischenkreis angeschlossen.

DD 220 271 A1 beschreibt eine Schaltungsanordnung für Reisezugwagen, bei der an eine Sammelschiene ein Wechselrichter angeschlossen ist, der über einen Transformator Drehstrommotoren einer Klimaanlage mit Energie versorgt. Über den Transformator ist eine Fremdeinspeisung möglich, sodass, wenn der Wechselrichter als Lade-Gleichrichter betrieben wird, Energie in die Sammelschiene eingespeist werden kann. EP 0 734 900 A1 beschreibt eine Schaltungsanordnung in einem aus einem Gleichspannungsnetz versorgbaren elektrischen Fahrzeug mit einem Gleichspannungs-Zwischenkreis, einem Traktions-Wechselrichter und einem Hilfsbetriebe-Wechselrichter, der über einen Transformator an Hilfsbetrieben des Fahrzeugs angeschlossen ist.

Es ist eine Aufgabe der vorliegenden Erfindung, ein Verfahren und eine Anordnung der eingangs genannten Art anzugeben, die einen Betrieb der Lokomotive insbesondere in den zuvor genannten Situationen ermöglichen, wobei die für den normalen Betrieb der Lokomotive genutzte Energiequelle (z.B. Dieselmotor oder elektrisches Versorgungsnetz) nicht zur Verfügung steht. Dabei soll ein zusätzlicher Aufwand in Form von speziellen Versorgungseinrichtungen möglichst gering gehalten werden.
Die beigefügten Ansprüche definieren den Schutzumfang.

Gemäß einem Grundgedanken wird für einen solchen außerordentlichen Betrieb der Anordnung zumindest ein Hilfsbetriebe-Wechselrichter genutzt, der während des normalen Betriebs Hilfsbetriebe der Lokomotive mit elektrischer Energie aus einem Traktions-Zwischenkreis der Lokomotive versorgt. In dem außerordentlichen Betrieb wird jedoch die Energieflussrichtung umgekehrt, d.h. die elektrische Energie wird über die Wechselspannungsseite des Hilfsbetriebe-Wechselrichters zugeführt, von dem Wechselrichter gleichgerichtet und in den Gleichspannungs-Zwischenkreis eingespeist.

Für die Einspeisung der elektrischen Energie wird lediglich ein Wechselspannungs-anschluss der Anordnung bzw. der Lokomotive benötigt, der an ein Wechselspannungsnetz (z.B. ein ortsfestes Niederspannungsnetz mit z.B. einer Nennspannung von 400 V) angeschlossen werden kann. Z.B. stehen Niederspannungsnetze in der Regel in allen Wartungshallen und Depots zur Verfügung. Es wird lediglich ein ausreichend langes Kabel benötigt, um die Lokomotive mit der elektrischen Energie aus dem Netz, aber aus eigener Kraft mit Hilfe eines Fahrmotors bewegen zu können.

Vorzugsweise wird zur Zuführung der Energie zu dem Hilfsbetriebe-Wechselrichter eine Leitung (im Folgenden teilweise auch Strompfad genannt) verwendet, in der sich ein Transformator befindet. Der Transformator dient während des normalen Betriebes der Lokomotive dazu, die Hilfsbetriebe mit einer gegenüber der Ausgangsspannung des Hilfsbetriebe-Wechselrichters auf dessen Wechselspannungsseite reduzierten Wechselspannung zu betreiben. Bei der umgekehrten Energieflussrichtung im außerordentlichen Betrieb der Lokomotive kann nun der Transformator dazu genutzt werden, eine niedrigere Wechselspannung hochzutransformieren und die hochtransformierte Spannung dem Hilfsbetriebe-Wechselrichter auf dessen Wechselspannungsseite zur Verfügung zu stellen. Durch den Transformator kann daher eine höhere Spannung in dem Gleichspannungs-Zwischenkreis erreicht werden, so dass eine Traktion der Lokomotive effektiver und mit höherer Leistung möglich ist.

Als Energiequelle für den normalen Betrieb der Lokomotive kommt insbesondere ein Einphasen-Wechselspannungsnetz oder auch ein Gleichspannungsnetz in Frage. Alternativ kann die Energiequelle z.B. ein Dieselmotor sein, der einen Generator antreibt, welcher eine Wechselspannung generiert. Die eigentliche Energiequelle ist zwar dann der Dieselmotor. Im Folgenden wird aber teilweise der Generator als Energiequelle betrachtet, da es für die vorliegende Erfindung lediglich auf den elektrischen Teil der Energieversorgung ankommt.

Gemäß Anspruch 1 wird ein Verfahren zum Betreiben einer Anordnung zur Versorgung von Einrichtungen eines Fahrzeuges mit elektrischer Energie vorgeschlagen, wobei während eines normalen Betriebes der Anordnung:- elektrische Energie aus einem Gleichspannungs-Zwischenkreis über zumindest einen Traktions-Wechselrichter umgerichtet wird, um zumindest einen Fahrmotor des Fahrzeuges mit elektrischer Energie zu versorgen,- Hilfsbetriebe des Fahrzeuges über einen Hilfsbetriebe-Wechselrichter mit elektrischer Energie aus dem Gleichspannungs-Zwischenkreis versorgt werden,dadurch gekennzeichnet, dass das Fahrzeug eine Lokomotive ist,wobei während eines außerordentlichen Betriebes der Anordnung:-elektrische Energie aus einem Wechselspannungsnetz über einen Wechselspannungsanschluss einem Transformator der Anordnung zugeführt,- die elektrische Energie von dem Transformator auf ein höheres Spannungsniveau transformiert wird,- die hochtransformierte Energie über den Hilfsbetriebe-Wechselrichter in den Gleichspannungs-Zwischenkreis eingespeist und- zumindest ein Fahrmotor der Lokomotive über den Traktions-Wechselrichter mit elektrischer Energie aus dem Gleichspannungs-Zwischenkreis versorgt wird.

Dementsprechend kann die Anordnung gemäß Anspruch 9 zur Versorgung von Einrichtungen einer Lokomotive, die nicht Teil der Anordnung ist, mit elektrischer Energie, wobei die Anordnung aufweist:
- einen Gleichspannungs-Zwischenkreis, der einen Anschluss zum Anschließen an eine Energiequelle aufweist,
- zumindest einen Traktions-Wechselrichter zum Erzeugen einer Wechselspannung aus einer Gleichspannung in dem Gleichspannungs-Zwischenkreis, wobei der Traktions-Wechselrichter mit einer Gleichspannungsseite an dem Gleichspannungs-Zwischenkreis angeschlossen ist und mit einer Wechselspannungsseite an einem Fahrmotor der Lokomotive angeschlossen oder anschließbar ist, - einen Hilfsbetriebe-Wechselrichter zum Erzeugen einer Wechselspannung aus der Gleichspannung in dem Gleichspannungs-Zwischenkreis, wobei der Hilfsbetriebe-Wechselrichter mit einer Gleichspannungsseite an dem Gleichspannungs-Zwischenkreis angeschlossen ist,
- wobei der Hilfsbetriebe-Wechselrichter mit einer Wechselspannungsseite über einen Transformator an Hilfsbetrieben der Lokomotive angeschlossen oder anschließbar ist, wobei eine Primärseite des Transformators mit der Wechselspannungsseite des Hilfsbetriebe-Wechselrichters verbunden ist und eine Sekundärseite des Transformators mit den Hilfsbetrieben verbunden oder verbindbar ist,dadurch gekennzeichnet, dass
- die Anordnung einen Wechselspannungsanschluss aufweist, der mit der Sekundärseite des Transformators verbunden ist.

Einer. Weiterbildung der Erfindung liegt das Problem zugrunde, dass bei einem plötzlichen Zuschalten des externen Wechselspannungsnetzes zur Speisung des Zwischenkreises über den Hilfsbetriebe-Wechselrichter kurzzeitig sehr hohe Ströme fließen können, die zu einem Ansprechen von Sicherungseinrichtungen führen können. Insbesondere kann es dann zu einer unbeabsichtigten Abschaltung der Ströme kommen. Es wird daher vorgeschlagen, den Gleichspannungs-Zwischenkreis vor der Versorgung eines Fahrmotors der Lokomotive mit einer Vorladeeinrichtung aufzuladen. Da Zwischenkreise in der Regel mit hohen Kapazitäten ausgestattet sind, um Schwankungen der Gleichspannung zu glätten, kann der Aufladevorgang einige Zeit in Anspruch nehmen.

Zur Aufladung sind verschiedene Konzepte denkbar, die auch teilweise miteinander kombiniert werden können. So kann das Aufladen des Gleichspannungs-Zwischenkreises z.B. nach Verstreichen einer vorgegebenen Zeitspanne seit Beginn der Aufladung automatisch beendet werden. Wenn die Kapazitäten und Induktivitäten, die am Aufladevorgang beteiligt sind, bekannt sind, kann eine solche Zeitspanne vorausberechnet werden. Es ist aber auch möglich, den Aufladevorgang einmalig durchzuführen, um die zum Erreichen einer gewünschten Spannung im Zwischenkreis erforderliche Aufladezeit zu messen.

Gemäß einem anderen Konzept wird das Aufladen des Gleichspannungs-Zwischenkreises beendet, wenn das Erreichen einer vorgegebenen Gleichspannung in dem Gleichspannungs-Zwischenkreis festgestellt wird. Da eine Steuerung der an den Zwischenkreis angeschlossenen Stromrichter in der Regel über eine entsprechende Messeinrichtung verfügt, müssen derzeit bekannte und vorhandene Anordnungen nicht modifiziert werden.

Bevorzugtermaßen wird die elektrische Energie für das Aufladen des Gleichspannungs-Zwischenkreises über den Wechselspannungsanschluss aus demselben Wechselspannungsnetz bezogen, das auch später während dem eigentlichen außerordentlichen Betrieb als Energiequelle dient. Dabei wird jedoch der während dem Aufladen fließende Strom im Vergleich zu einem später während des Betriebes des Fahrmotors über den Wechselspannungsanschluss in den Gleichspannungs-Zwischenkreis fließenden Strom auf einen niedrigeren Wert begrenzt. Dieser niedrigere Wert muss während des Aufladevorgangs nicht konstant sein. Vielmehr kann die Begrenzung auch lediglich darin bestehen, dass ein elektrischer Widerstand oder eine Mehrzahl von elektrischen Widerständen in den Strompfad geschaltet werden. Anstelle von Widerständen oder zusätzlich ist es auch denkbar, eine hohe Induktivität hinzuzuschalten. Selbstverständlich können auch andere Strombegrenzungseinrichtungen verwendet werden, z.B. eine elektronisch gesteuerte Begrenzungseinrichtung.

Zum Zuschalten der Strombegrenzungsmittel kann eine Schalteinrichtung verwendet werden, die z.B. fest in der Anordnung verbaut ist. So ist z.B. der für den normalen oder auch für den außerordentlichen Betrieb verwendete Strompfad durch die Schalteinrichtung auftrennbar und befindet sich in einem zuschaltbaren Beipass, der den aufgetrennten Abschnitt des Strompfades überbrückt, die Strom-Begrenzungseinrichtung.

Ein weiteres Problem, das einer Ausgestaltung der Erfindung zugrundeliegt, betrifft Filtereinrichtungen, die üblicherweise zum Dämpfen und/oder Filtern unerwünschter Schwingungsfrequenzen auf der Wechselspannungsseite des Hilfsbetriebe-Wechselrichters vorgesehen sind. Diese Filtereinrichtungen sind auf den normalen Betrieb der Lokomotive ausgelegt. Beim außerordentlichen Betrieb jedoch sind die Verhältnisse anders. Insbesondere hat die Wechselspannung, die im außerordentlichen Betrieb an den Wechselspannungsanschluss angelegt wird, eine andere Frequenz, z.B. 50 Hz. Andererseits finden Schwingungsanregungen, die im normalen Betrieb vorkommen, nicht statt.

Es wird daher vorgeschlagen, die Filtereinrichtungen oder zumindest einen Teil davon abzuschalten und/oder die Filtereinrichtungen oder die Filtereinrichtung automatisch für den außerordentlichen Betrieb zu modifizieren. Z.B. kann die Filtereinrichtung bei einer Dreiphasen-Wechselspannungsversorgung der Hilfsbetriebe durch eine Sternschaltung von drei Kapazitäten realisiert sein. In diesem Fall wird z.B. die Sternschaltung von der Dreiphasen-Leitung automatisch durch Abschalten getrennt.

Ausführungsbeispiele der Erfindung werden nun unter Bezugnahme auf die beigefügte Zeichnung beschrieben. Die einzelnen Figuren der Zeichnung zeigen:
- Fig. 1: einen Gleichspannungszwischenkreis mit daran angeschlossenen Hilfsbetrieben und einen Wechselspannungsanschluss für den außerordentlichen Betrieb, und
- Fig. 2: eine Anordnung mit drei Hilfsbetriebe-Wechselrichtern und daran angeschlossenen Hilfsbetrieben, die für den außerordentlichen Betrieb genutzt werden kann.

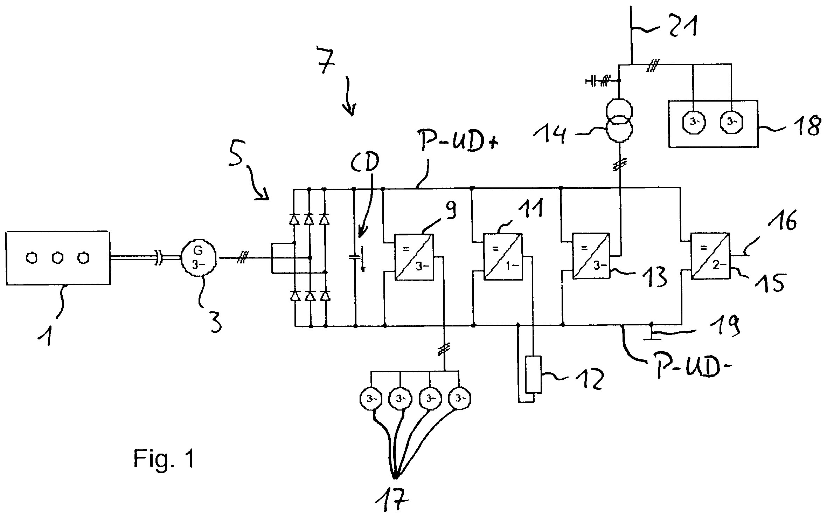

In Fig. 1 zeigt einen Dieselmotor 1, der einen Generator 3 antreibt. Der Generator 3 erzeugt einen Dreiphasen-Wechselstrom, welcher über einen Gleichrichter 5 gleichgerichtet wird. Der Gleichrichter 5 ist an einen Gleichspannungs-Zwischenkreis 7 angeschlossen. Die Potentiale des Gleichspannungs-Zwischenkreises 7 sind mit P-UD+ (obere in Fig. 1 dargestellte Seite des Zwischenkreises 7) und mit P-UD- (untere in Fig. 1 dargestellte Seite des Zwischenkreises 7) bezeichnet. Das Potential P-UD- kann an der mit den Bezugszeichen 19 bezeichneten Stelle mit Fahrzeugmasse verbunden sein.

An den Zwischenkreis 7 sind ein Traktionswechselrichter 9, der vier Antriebsmotoren 17 des Schienenfahrzeugs über eine dreiphasige Verbindung versorgt, ein Brems-Chopper 11, an den ein Bremswiderstand 12 angeschlossen ist, ein Hilfsbetriebe-Wechselrichter 13, der Hilfsbetriebe 18 über eine Dreiphasen-Wechselstromleitung versorgt, und ein Verbraucher-Wechselrichter 15 angeschlossen, der Verbraucher z. B. in einem angekoppelten Zugverband über eine einphasige Zugsammelschiene mit elektrischer Energie versorgt.

Der in Fig. 1 dargestellte Hilfsbetriebe-Wechselrichter 13 ist über einen Trenntransformator 14, der eine galvanische Trennung bewirkt, mit den Hilfsbetrieben 18 verbunden. Außerdem ist die Dreiphasen-Leitung, die die Sekundärseite (Niederspannungsseite) des Transformators 14 mit den Hilfsbetrieben 18 verbindet, ein Wechselspannungsanschluss 21 vorgesehen, der für den außerordentlichen Betrieb mit einem Wechselspannungsnetz verbunden werden kann. Z.B. kann es sich bei dem Wechselspannungsanschluss 21 um eine Dreiphasen-Normbuchse für ein 400-V-Niederspannungsnetz handeln.

Im Vergleich zu der in Fig. 1 dargestellten Anordnung kann eine Vielzahl von Modifikationen vorgenommen werden. Z.B. kann anstelle des Dieselmotors und des Generators sowie des Dreiphasen-Gleichrichters 5 ein Anschluss an ein Einphasen-Hochspannungsnetz vorgesehen sein. Zusätzlich zu dem einen Gleichspannungs-Zwischenkreis 7 kann ein oder mehrere weitere Zwischenkreise vorgesehen sein, über die ein Teil der Fahrmotoren oder zusätzliche Fahrmotoren mit Energie versorgt werden. An dem Gleichspannungs-Zwischenkreis können weitere Einrichtungen angeschlossen sein und/oder in diesen integriert sein, insbesondere Sicherungen und/oder ein Saugkreis.

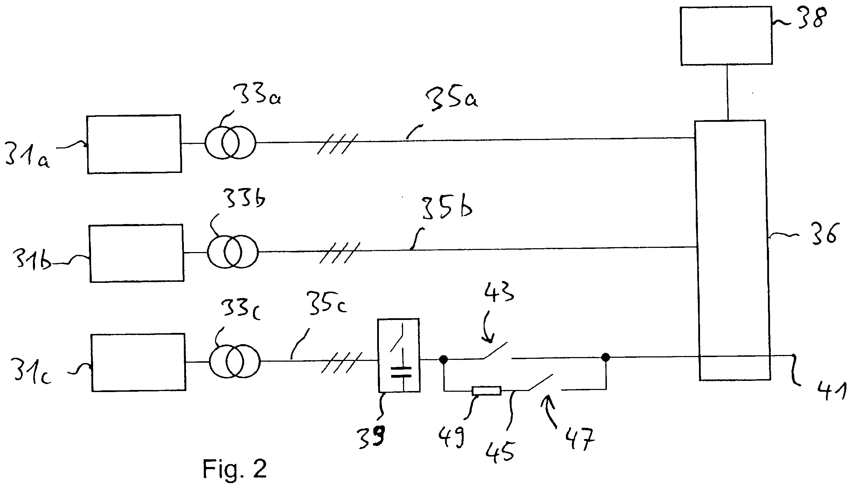

An denselben Gleichspannungs-Zwischenkreis kann eine Mehrzahl von Hilfsbetriebe-Wechselrichtern angeschlossen sein, wie es im Fall der Fig. 2 vorgesehen ist.

Die Versorgung der Hilfsbetriebe kann lediglich einphasig ausgestaltet sein.

Dementsprechend würde für den außerordentlichen Betrieb auch der Wechselspannungsanschluss einphasig ausgestaltet sein.

Im außerordentlichen Betrieb wird, wie erwähnt, der Wechselspannungsanschluss 21 mit einem Wechselspannungsnetz verbunden, so dass aus dem Netz elektrische Energie bezogen und nach Hochtransformation durch den Transformator 14 in den Gleichspannungs-Zwischenkreis 7 eingespeist werden kann. Dabei wird vorzugsweise, wie noch näher anhand von Fig. 2 beschrieben werden wird, zunächst der Gleichspannungs-Zwischenkreis 7 aufgeladen, bevor über den oder die Traktions-Wechselrichter 9 ein oder mehrere Fahrmotoren gespeist werden. Insbesondere ist es sinnvoll, im außerordentlichen Betrieb lediglich einen Teil der Fahrmotoren mit elektrischer Energie zu versorgen. Dies reicht aus, um die Lokomotive zumindest langsam und über kurze Distanzen zu bewegen. Höhere Geschwindigkeiten und höhere Distanzen sind in der Regel im außerordentlichen Betrieb nicht erwünscht.

Bei den Hilfsbetrieben 18 kann es sich insbesondere um ein oder mehrere der eingangs in dieser Beschreibung erwähnten Hilfsbetriebe handeln. Z.B. gehört zu den Hilfsbetrieben 18 auch eine Kühleinrichtung zum Kühlen des Stromrichters 13, des Transformators 14 und/oder für die Kühlung einer oder mehrerer der anderen Stromrichter 9, 11, 15 und/oder der Fahrmotoren 17. Auch die Steuereinrichtungen zum Steuern des Betriebs der Stromrichter 9, 11, 13, 15 können zu den Hilfsbetrieben 18 gehören. Im außerordentlichen Betrieb kann jedoch ein Betrieb des Stromrichters 15 für die Versorgung von angekoppelten Schienenfahrzeug-Einheiten entfallen.

Fig. 2 zeigt drei Hilfsbetriebe-Stromrichter 31a, 31b, 31c, die an demselben Gleichspannungs-Zwischenkreis angeschlossen sein können. Es ist jedoch auch möglich, dass zwei oder alle Stromrichter 31 an verschiedenen Zwischenkreisen angeschlossen sind. Alternativ oder zusätzlich können die Zwischenkreise miteinander verbunden sein, oder für den außerordentlichen Betrieb verbunden werden. Dadurch kann im außerordentlichen Betrieb über einen Hilfsbetriebe-Wechselrichter in den ersten Zwischenkreis Energie eingespeist werden, Energie in den zweiten Zwischenkreis übertragen werden und ein Fahrmotor mit Energie aus dem zweiten Zwischenkreis betrieben werden.

Die Stromrichter 31 dienen während des normalen Betriebes der Lokomotive der Versorgung von Hilfsbetrieben, die in Fig. 2 durch einen Kasten mit dem Bezugszeichen 38 symbolisiert sind. Dabei erfolgt die Versorgung der Hilfsbetriebe 38 über eine Anschluss- und Verteilungseinrichtung 36. Bei dem Stromrichter 31c gemäß Fig. 2 kann es sich z.B. um den Hilfsbetriebe-Wechselrichter 13 gemäß Fig. 1 handeln.

Die Stromrichter 31 sind jeweils über einen Transformator 33a, 33b, 33c mit der Einrichtung 36 verbunden, und zwar in dem hier dargestellten Ausführungsbeispiel jeweils über eine Dreiphasen-Leitung 35a, 35b, 35c.

Die folgenden Ausführungen gelten lediglich für den Stromrichter 31c. Bei alternativen Ausgestaltungen können die Ausführungen jedoch auch auf einen oder beide anderen Stromrichter 31a, 31b zutreffen.

Der Hilfsbetriebe-Wechselrichter 31c ist über den ihm zugeordneten Transformator 33c an eine Filtereinrichtung zum Ausfiltern störender Frequenzen während des normalen Betriebes angeschlossen. Die Filtereinrichtung ist mit dem Bezugszeichen 39 bezeichnet und enthält, wie symbolisch in Fig. 2 dargestellt, z.B. einen oder mehrere Kapazitäten. Ferner ist in der Filtereinrichtung 39 ein Schalter dargestellt. Durch Betätigung des Schalters kann die Filtereinrichtung 39 abgeschaltet werden, d.h. sie ist im abgeschalteten Zustand nicht mehr wirksam. Z.B. handelt es sich bei dem Schalter der Filtereinrichtung 39 um einen Transistorschalter, der von einer zentralen Steuerung der Gesamtanordnung aus Fig. 1 und Fig. ansteuerbar ist. Zu der zentralen Steuerung können auch die Steuereinheiten zum Steuern des Betriebs der diversen Wechselrichter bzw. Gleichrichter 5, 9, 11, 13, 15 gehören.

Insbesondere, und dies gilt nicht nur bezogen auf die Ausführungsbeispiele von Fig. 1 und Fig. 2, kann das Verfahren der vorliegenden Erfindung durch einen Computer ausgeführt werden, der die für die Einleitung und weitere Ausführung des außerordentlichen Betriebes erforderlichen Handlungen ausführt, mit Ausnahme einer z.B. manuell herzustellenden Verbindung des Wechselspannungsanschlusses zu dem Wechselspannungsnetz. Insbesondere kann der Computer sämtliche Schaltvorgänge und/oder den Betrieb des oder der Hilfsbetriebe-Umrichter steuern, die im außerordentlichen Betrieb benötigt werden. Alle Schalter in Fig. 2 sind daher vorzugsweise von dem Computer steuerbar.

In der Leitung 35c zwischen dem Transformator 33c und der Einrichtung 36 befindet sich außerdem noch ein Schalter 43 (im Falle einer Dreiphasen-Leitung ein Dreiphasen-Schalter, z.B. ein Schütz), mit dem ein Abschnitt der Leitung 35c aufgetrennt werden kann.

Ferner ist der Abschnitt der Leitung 35c mit dem Schalter 43 durch einen Beipass 45 überbrückt, wobei sich in dem Beipass 45 ebenfalls ein Schalter 47 und eine Begrenzungseinrichtung 49 in Reihe hintereinander geschaltet befinden. Im Falle einer Dreiphasen-Leitung 35c ist ein solcher Beipass für jede der Phasen üblicherweise vorgesehen. Die Realisierung ist aber auch mit nur je einem Beipass in 2 Phasen möglich.

Wie in Fig. 2 rechts unten dargestellt ist, endet die Leitung 35c an einem Wechselspannungsanschluss 41. Für den außerordentlichen Betrieb ist es daher möglich, den Wechselspannungsanschluss 41 mit einem Wechselspannungsnetz oder auch mit einem Wechselspannungsgenerator zu verbinden. Zur Vorbereitung des eigentlichen außerordentlichen Betriebs wird zunächst der Schalter 43 geöffnet, die Filtereinrichtung 39 abgetrennt, dann der Schalter 47 geschlossen, über den Beipass 45 und den Widerstand 49 ein in den Wechselspannungsanschluss 41 von außen eingespeister Strom geführt, dieser Strom durch den Transformator 33c auf ein höheres Spannungsniveau transformiert und auf der dem Transformator 33c zugewandten Wechselspannungsseite des Hilfsbetriebe-Wechselrichters 31c in diesen eingespeist. Dadurch generiert der Hilfsbetriebe-Wechselrichter 31c in Umkehrung seiner sonstigen normalen Funktionsweise einen Gleichstrom, der in den entsprechenden Zwischenkreis eingespeist wird. Dadurch wird der Zwischenkreis aufgeladen. Nach Beendigung der Aufladung wird der Schalter 47 geöffnet, der Schalter 43 geschlossen und daher über den normalen Strompfad der Leitung 35c Strom von dem Wechselspannungsanschluss 41 über den Transformator 33c dem Hilfsbetriebe-Wechselrichter 31c auf dessen Wechselspannungsseite zugeführt. Der in diesem Fall und des eigentlichen außerordentlichen Betriebes an der Gleichspannungsseite des Wechselrichters 31c generierte Strom kann für die Versorgung zumindest eines Fahrmotors mit elektrischer Energie aus dem Zwischenkreis genutzt werden.

Während des außerordentlichen Betriebs werden Hilfsbetriebe 38 vorzugsweise direkt mit Energie über den Wechselspannungsanschluss 41 und die Einrichtung 36 versorgt, ohne den Umweg über den Zwischenkreis nehmen zu müssen. Auch eine solche Umweg-Versorgung über den Zwischenkreis ist aber denkbar, insbesondere dann, wenn einzelne Hilfsbetriebe lediglich an einen anderen Hilfsbetriebe-Wechselrichter (z.B. 31a, 31b) angeschlossen sind. Der Betrieb solcher Hilfsbetriebe während des außerordentliche Betriebes, z.B. von Kühleinrichtungen, gewährleistet die volle Funktion z.B. des Hilfsbetriebe-Wechselrichters 31c und der anderen Stromrichter aus Fig. 1.

## Patentansprüche

1. Verfahren zum Betreiben einer Anordnung zur Versorgung von Einrichtungen eines Fahrzeuges mit elektrischer Energie, wobei während eines normalen Betriebes der Anordnung:
- elektrische Energie aus einem Gleichspannungs-Zwischenkreis (7) über zumindest einen Traktions-Wechselrichter (9) umgerichtet wird, um zumindest einen Fahrmotor (17) des Fahrzeuges mit elektrischer Energie zu versorgen,
- Hilfsbetriebe (18) des Fahrzeuges über einen Hilfsbetriebe-Wechselrichter (13) mit elektrischer Energie aus dem Gleichspannungs-Zwischenkreis (7) versorgt werden,
**dadurch gekennzeichnet, dass** das Fahrzeug eine Lokomotive ist,
wobei während eines außerordentlichen Betriebes der Anordnung:
- elektrische Energie aus einem Wechselspannungsnetz über einen Wechselspannungsanschluss (21) einem Transformator (14) der Anordnung zugeführt,
- die elektrische Energie von dem Transformator (14) auf ein höheres Spannungsniveau transformiert wird,
- die hochtransformierte Energie über den Hilfsbetriebe-Wechselrichter (13) in den Gleichspannungs-Zwischenkreis (7) eingespeist und
- zumindest ein Fahrmotor (17) der Lokomotive über den Traktions-Wechselrichter (9) mit elektrischer Energie aus dem Gleichspannungs-Zwischenkreis (7) versorgt wird.

2. Verfahren nach dem vorhergehenden Anspruch, wobei der Gleichspannungs-Zwischenkreis (7) vor der Versorgung des Fahrmotors (17) in dem außerordentlichen Betrieb aufgeladen wird.

3. Verfahren nach dem vorhergehenden Anspruch, wobei das Aufladen des Gleichspannungs-Zwischenkreises (7) nach Verstreichen einer vorgegebenen Zeitspanne beendet wird.

4. Verfahren nach Anspruch 2, wobei das Aufladen des Gleichspannungs-Zwischenkreises (7) beendet wird, wenn das Erreichen einer vorgegebenen Gleichspannung in dem Gleichspannungs-Zwischenkreis (7) festgestellt wird.

5. Verfahren nach einem der Ansprüche 2 bis 4, wobei die elektrische Energie für das Aufladen des Gleichspannungs-Zwischenkreises (7) über den Wechselspannungsanschluss (21) aus einem Wechselspannungsnetz bezogen wird und wobei der während dem Aufladen fließende Strom im Vergleich zu einem später während des Betriebes des Fahrmotors (17) über den Wechselspannungsanschluss (21) in den Gleichspannungs-Zwischenkreis (7) fließenden Strom auf einen niedrigeren Wert begrenzt ist.

6. Verfahren nach dem vorhergehenden Anspruch, wobei Begrenzungsmittel (49) zur Begrenzung des Stroms auf den niedrigeren Wert zum Aufladen hinzugeschaltet werden und bei Beendigung des Auflade-Vorgangs abgeschaltet werden.

7. Verfahren nach einem der vorhergehenden Ansprüche, wobei der Wechselspannungsanschluss (21) für den außerordentlichen Betrieb an ein Niederspannungs-Netz, insbesondere ein Dreiphasen-Wechselspannungsnetz angeschlossen wird.

8. Verfahren nach einem der vorhergehenden Ansprüche, wobei eine Filtereinrichtung (39) zum Dämpfen und/oder Filtern unerwünschter Schwingungsfrequenzen, die zwischen der Wechselspannungsseite des Hilfsbetriebe-Wechselrichters (31) und dem Wechselspannungsanschluss (41) angeordnet ist, während des außerordentlichen Betriebes abgeschaltet wird.

9. Anordnung zur Versorgung von Einrichtungen einer Lokomotive, die nicht Teil der Anordnung ist, mit elektrischer Energie, wobei die Anordnung aufweist:
- einen Gleichspannungs-Zwischenkreis (7), der einen Anschluss zum Anschließen an eine Energiequelle (3) aufweist,
- zumindest einen Traktions-Wechselrichter (9) zum Erzeugen einer Wechselspannung aus einer Gleichspannung in dem Gleichspannungs-Zwischenkreis (7), wobei der Traktions-Wechselrichter (9) mit einer Gleichspannungsseite an dem Gleichspannungs-Zwischenkreis (7) angeschlossen ist und mit einer Wechselspannungsseite an einem Fahrmotor (17) der Lokomotive angeschlossen oder anschließbar ist,
- einen Hilfsbetriebe-Wechselrichter (13) zum Erzeugen einer Wechselspannung aus der Gleichspannung in dem Gleichspannungs-Zwischenkreis (7), wobei der Hilfsbetriebe-Wechselrichter (13) mit einer Gleichspannungsseite an dem Gleichspannungs-Zwischenkreis (7) angeschlossen ist,
- wobei der Hilfsbetriebe-Wechselrichter (13) mit einer Wechselspannungsseite über einen Transformator (14) an Hilfsbetrieben (18) der Lokomotive angeschlossen oder anschließbar ist, wobei eine Primärseite des Transformators (14) mit der Wechselspannungsseite des Hilfsbetriebe-Wechselrichters (13) verbunden ist und eine Sekundärseite des Transformators (14) mit den Hilfsbetrieben (18) verbunden oder verbindbar ist,
**dadurch gekennzeichnet, dass**
- die Anordnung einen Wechselspannungsanschluss (21) aufweist, der mit der Sekundärseite des Transformators (14) verbunden ist.

10. Anordnung nach dem vorhergehenden Anspruch, wobei die Anordnung ferner eine Aufladeeinrichtung (43, 45, 47, 49) zum Aufladen des Gleichspannungs-Zwischenkreises aufweist, wobei die Aufladeeinrichtung mit dem Wechselspannungsanschluss (41) verbunden ist und ausgestaltet ist, den Gleichspannungs-Zwischenkreis über den Transformator (33c) aufzuladen.

11. Anordnung nach dem vorhergehenden Anspruch, wobei die Aufladeeinrichtung (43, 45, 47, 49) Strom-Begrenzungsmittel (49) zum Begrenzen eines während dem Aufladen fließenden elektrischen Stroms aufweist.

12. Anordnung nach dem vorhergehenden Anspruch, wobei die Aufladeeinrichtung (43, 45, 47, 49) eine Schalteinrichtung (43, 47) aufweist, mit der ein Strompfad (35c), der den Wechselspannungsanschluss (41) mit dem Gleichspannungs-Zwischenkreis verbindet, so umgeschaltet werden kann, dass der Strompfad (35c) über die Begrenzungsmittel (49) führt.

13. Anordnung nach einem der Ansprüche 9 bis 12, wobei der Wechselspannungsanschluss (41) ausgestaltet ist, an ein Niederspannungs-Netz, insbesondere ein Dreiphasen-Wechselspannungsnetz angeschlossen zu werden.

14. Anordnung nach einem der Ansprüche 9 bis 13, wobei die Anordnung zwischen der Wechselspannungsseite des Hilfsbetriebe-Wechselrichters (31c) und dem Wechselspannungsanschluss eine Filtereinrichtung (39) zum Dämpfen und/oder Filtern unerwünschter Schwingungsfrequenzen aufweist und wobei die Anordnung eine Abschalteinrichtung zum Abschalten der Filtereinrichtung (39) während einer Speisung des Gleichspannungs-Zwischenkreises mit elektrischer Energie über den Wechselspannungs-Anschluss (41) aufweist.

15. Lokomotive mit einer Anordnung nach einem der vorhergehenden Ansprüche 9 bis 14.

## Claims

1. A method for operating an assembly for supplying devices of a vehicle with electrical energy, wherein, during normal operation of the assembly:
- electrical energy from a DC link (7) is converted via at least one traction inverter (9) so as to supply at least one drive motor (17) of the vehicle with electrical energy,
- auxiliary devices (18) of the vehicle are supplied with electrical energy from the DC link (7) via an auxiliary devices inverter (13),
**characterised in that** the vehicle is a locomotive,
wherein, during an extraordinary operation of the assembly:
- electrical energy is fed from an AC voltage net to a transformer (14) of the assembly via an AC voltage connection (21),
- the electrical energy is stepped-up to a higher voltage level by the transformer (14),
- the stepped-up energy is fed into the DC link (7) via the auxiliary devices inverter (13), and
- at least one drive motor (17) of the locomotive is supplied with electrical energy from the DC link (7) via the traction inverter (9).

2. The method according to the preceding claim, wherein the DC link (7) is charged prior to the supply of the drive motor (17) in the extraordinary operation.

3. The method according to the preceding claim, wherein the charging of the DC link (7) is ended once a predefined period of time has elapsed.

4. The method according to claim 2, wherein the charging of the DC link (7) is ended when it is determined that a predefined DC voltage is reached in the DC link (7).

5. The method according to any one of claims 2 to 4, wherein the electrical energy for the charging of the DC link (7) via the AC voltage connection (21) is drawn from an AC voltage net and wherein the current flowing during the charging is limited to a lower value compared to a current flowing later during the operation of the drive motor (17) via the AC voltage connection (21) into the DC link (7).

6. The method according to the preceding claim, wherein limitation means (49) for limiting the current to the lower value are switched on for the charging and are switched off once the charging process is ended.

7. The method according to any one of the preceding claims, wherein the AC voltage connection (21) is connected for the extraordinary operation to a low-voltage net, in particular a three-phase AC voltage net.

8. The method according to any one of the preceding claims, wherein a filter device (39) for damping and/or filtering undesirable oscillation frequencies which is arranged between the AC voltage side of the auxiliary devices inverter (31) and the AC voltage connection (41) is switched off during the extraordinary operation.

9. An assembly for supplying devices of a locomotive, which is not part of the assembly, with electrical energy, wherein the assembly comprises:
- a DC link (7), which has a connection for connecting to an energy source (3),
- at least one traction inverter (9) for generating an AC voltage from a DC voltage in the DC link (7), wherein the traction inverter (9) is connected to the DC link (7) by a DC voltage side and is connected or connectable by an AC voltage side to a drive motor (17) of the locomotive,
- an auxiliary devices inverter (13) for generating an AC voltage from the DC voltage in the DC link (7), wherein the auxiliary devices inverter (13) is connected of a DC voltage side to the DC link (7),
- wherein the auxiliary devices inverter (13) is connected or connectable of an AC voltage side via a transformer (14) to auxiliary devices (18) of the locomotive, wherein a primary side of the transformer (14) is connected to the AC voltage side of the auxiliary devices inverter (13) and a secondary side of the transformer (14) is connected or connectable to the auxiliary devices (18),
**characterised in that**
- the assembly comprises an AC voltage connection which is connected to the secondary side of the transformer (14).

10. The assembly according to the preceding claim, wherein the assembly furthermore comprises a charging device (43, 45, 47, 49) for charging the DC link, wherein the charging device is connected to the AC voltage connection (41) and is designed to charge the DC link via the transformer (33c).

11. The assembly according to the preceding claim, wherein the charging device (43, 45, 47, 49) comprises current limitation means (49) for limiting an electric current flowing during the charging.

12. The assembly according to the preceding claim, wherein the charging device (43, 45, 47, 49) comprises a switching device (43, 47), by means of which a current path (35c) which connects the AC voltage connection (41) to the DC link can be switched over such that the current path (35c) passes via the limitation means (49).

13. The assembly according to any one of claims 9 to 12, wherein the AC voltage connection (41) is designed to be connected to a low-voltage net, in particular a three-phase AC voltage net.

14. The assembly according to any one of claims 9 to 13, wherein the assembly between the AC voltage side of the auxiliary devices inverter (31c) and the AC voltage connection comprises a filter device (39) for damping and/or filtering undesirable oscillation frequencies, and wherein the assembly comprises a disconnection device for switching off the filter device (39) during a feeding of the DC link with electrical energy via the AC voltage connection (41).

15. A locomotive comprising an assembly according to any one of preceding claims 9 to 14.

## Revendications

1. Procédé servant à faire fonctionner un ensemble servant à alimenter des équipements d'un véhicule en énergie électrique, dans lequel pendant un fonctionnement normal de l'ensemble :
- de l'énergie électrique provenant d'un circuit intermédiaire à tension continue (7) est convertie par l'intermédiaire d'au moins un onduleur de traction (9) pour alimenter au moins un moteur à traction (17) du véhicule en énergie électrique,
- des systèmes auxiliaires (18) du véhicule sont alimentés en énergie électrique provenant du circuit intermédiaire à tension continue (7) par l'intermédiaire d'un onduleur de systèmes auxiliaires (13),
**caractérisé en ce que** le véhicule est une locomotive, dans lequel pendant un fonctionnement extraordinaire de l'ensemble :
- de l'énergie électrique provenant d'un réseau à tension alternative est amenée à un transformateur (14) de l'ensemble par l'intermédiaire d'une borne de tension alternative (21),
- l'énergie électrique est transformée par le transformateur (14) à un niveau de tension plus élevée,
- l'énergie augmentée est injectée dans le circuit intermédiaire à tension continue (7) par l'intermédiaire de l'onduleur de systèmes auxiliaires (13), et
- au moins un moteur à traction (17) de la locomotive est alimenté en énergie électrique provenant du circuit intermédiaire à tension continue (7) par l'intermédiaire de l'onduleur de traction (9).

2. Procédé selon la revendication précédente, dans lequel le circuit intermédiaire à tension continue (7) est rechargé avant l'alimentation du moteur à traction (17) dans le mode de fonctionnement exceptionnel.

3. Procédé selon la revendication précédente, dans lequel le rechargement du circuit intermédiaire à tension continue (7) est terminé une fois un intervalle de temps prédéfini passé.

4. Procédé selon la revendication 2, dans lequel le rechargement du circuit intermédiaire à tension continue (7) est terminé quand l'obtention d'une tension continue prédéfinie dans le circuit intermédiaire à tension continue (7) est constatée.

5. Procédé selon l'une quelconque des revendications 2 à 4, dans lequel l'énergie électrique pour le rechargement du circuit intermédiaire à tension continue (7) est prélevée d'un réseau à tension alternative par l'intermédiaire de la borne de tension alternative (21) et dans lequel le courant circulant pendant le rechargement est limité à une valeur inférieure en comparaison avec un courant circulant ultérieurement pendant le fonctionnement du moteur à traction (17) par l'intermédiaire de la borne de tension alternative (21) dans le circuit intermédiaire à tension continue (7).

6. Procédé selon la revendication précédente, dans lequel des moyens de limitation (49) sont ajoutés pour limiter le courant à la valeur inférieure aux fins du rechargement et sont déconnectés à la fin de l'opération de recharge.

7. Procédé selon l'une quelconque des revendications précédentes, dans lequel la borne de tension alternative (21) est raccordée pour le fonctionnement extraordinaire à un réseau à faible tension, en particulier à un réseau à tension alternative triphasé.

8. Procédé selon l'une quelconque des revendications précédentes, dans lequel un dispositif filtrant (39) servant à atténuer et/ou à filtrer des fréquences d'oscillations non souhaitées, qui est disposé entre le côté de tension alternative de l'onduleur de systèmes auxiliaires (31) et la borne de tension alternative (41), est déconnecté pendant le mode de fonctionnement extraordinaire.

9. Ensemble servant à alimenter des équipements d'une locomotive, qui ne font pas partie de l'ensemble, en énergie électrique, dans lequel l'ensemble présente :
- un circuit intermédiaire à tension continue (7), qui présente une borne destinée à être raccordée à une source d'énergie (3),
- au moins un onduleur de traction (9) servant à produire une tension alternative à partir d'une tension continue dans le circuit intermédiaire à tension continue (7), dans lequel l'onduleur de traction (9) est raccordé par un côté de tension continue au circuit intermédiaire à tension continue (7) et est raccordé ou peut être raccordé par un côté de tension alternative à un moteur à traction (17) de la locomotive,
- un onduleur de systèmes auxiliaires (13) servant à produire une tension alternative à partir de la tension continue dans le circuit intermédiaire à tension continue (7), dans lequel l'onduleur de systèmes auxiliaires (13) est raccordé par un côté de tension continue au circuit intermédiaire à tension continue (7),
- dans lequel l'onduleur de systèmes auxiliaires (13) est raccordé ou peut être raccordé par un côté de tension alternative par l'intermédiaire d'un transformateur (14) à des systèmes auxiliaires (18) de la locomotive, dans lequel un côté primaire du transformateur (14) est relié au côté de tension alternative de l'onduleur de systèmes auxiliaires (13) et un côté secondaire du transformateur (14) est relié ou peut être relié aux systèmes auxiliaires (18),
**caractérisé en ce que**
- l'ensemble présente une borne de tension alternative (21), qui est reliée au côté secondaire du transformateur (14) .

10. Ensemble selon la revendication précédente, dans lequel l'ensemble présente en outre un dispositif de rechargement (43, 45, 47, 49) servant à recharger le circuit intermédiaire à tension continue, dans lequel le dispositif de rechargement est relié à la borne de tension alternative (41) et est configuré pour recharger le circuit intermédiaire à tension continue par l'intermédiaire du transformateur (33c).

11. Ensemble selon la revendication précédente, dans lequel le dispositif de rechargement (43, 45, 47, 49) présente des moyens de limitation de courant (49) servant à limiter un courant électrique circulant pendant le rechargement.

12. Ensemble selon la revendication précédente, dans lequel le dispositif de rechargement (43, 45, 47, 49) présente un dispositif de commutation (43, 47), avec lequel un trajet de courant (35c), qui relie la borne de tension alternative (41) au circuit intermédiaire à tension continue, peut être commuté de telle sorte que le trajet de courant (35c) mène au-dessus des moyens de limitation (49).

13. Ensemble selon l'une quelconque des revendications 9 à 12, dans lequel la borne de tension alternative (41) est configurée pour être raccordée à un réseau à faible tension, en particulier à un réseau à tension alternative triphasé.

14. Ensemble selon l'une quelconque des revendications 9 à 13, dans lequel l'ensemble présente entre le côté de tension alternative de l'onduleur de systèmes auxiliaires (31c) et la borne de tension alternative un dispositif filtrant (39) servant à atténuer et/ou à filtrer des fréquences d'oscillations non souhaitées et dans lequel l'ensemble présente un dispositif de déconnexion servant à déconnecter le dispositif filtrant (39) pendant une alimentation du circuit intermédiaire à tension continue en énergie électrique par l'intermédiaire de la borne de tension alternative (41).

15. Locomotive avec un ensemble selon l'une quelconque des revendications précédentes 9 à 14.
